# EUROPÄISCHE PATENTSCHRIFT

(11) **EP 0 650 503 B1**
(45) Veröffentlichungstag und Bekanntmachung des Hinweises auf die Patenterteilung: **29.12.1997**
(21) Anmeldenummer: 93912644.7
(22) Anmeldetag: 02.07.1993
(51) Int. Cl.: C08G 59/02

(54) **Verfahren zur Herstellung von prepolymeren Epoxidharzmischungen,die Oxazolidinonstrukturen aufweisen**
Process for the production of prepolymer epoxy resins with oxazolidinone structures
méthode pour la fabrication des prepolymères de résines epoxy contenant des structures de oxazolidinone

(30) Priorität: 17.07.1992 DE 4223622
(43) Veröffentlichungstag der Anmeldung: 03.05.1995
(73) Patentinhaber: SIEMENS AKTIENGESELLSCHAFT, 80333 München (DE)
(72) Erfinder: MARKERT, Helmut, D-90461 Nürnberg (DE); KRETZSCHMAR, Klaus, D-91054 Erlangen (DE); SCHREYER, Michael, D-91058 Weisendorf (DE); MENNIG, Günter, D-64297 Darmstadt (DE); BRAUN, Peter, D-35410 Hungen (DE); EITEL, Oliver, D-74211 Leingarten (DE)
(86) Internationale Anmeldenummer: DE9300582
(87) Internationale Veröffentlichungsnummer: WO9402527

(56) Entgegenhaltungen:
- US-A- 4 562 227
- US-A- 4 631 306

## Beschreibung

Die Erfindung betrifft ein Verfahren zur Herstellung einer Oxazolidinonstrukturen aufweisenden prepolymeren Epoxidharzmischung.

Aus der WO 90/15089 ist es bekannt, epoxyterminierte Polyoxazolidinone (dort vereinfacht als Polyoxazolidone bezeichnet) durch Umsetzung einer Polyepoxidverbindung mit einer Polyisocyanatverbindung bei erhöhter Temperatur in Gegenwart eines Katalysators herzustellen. Dazu werden 5 bis 30 Gew.-% der Polyisocyanatverbindung innerhalb von 30 bis 90 min zu einem Gemisch von 70 bis 95 Gew.-% der Polyepoxidverbindung und 0,01 bis 2 Gew.-% des Katalysators gegeben, und das dabei erhaltene Reaktionsgemisch wird dann für die Dauer von 5 bis 180 min auf eine Temperatur von 110 bis 20°C erhitzt. Das Verfahren wird - durch Regulierung verschiedener Prozeßparameter - in der Weise durchgeführt, daß beim resultierenden epoxyterminierten Polyoxazolidinon, das auch als isocyanatmodifiziertes Epoxidharz bezeichnet wird, 50 bis 100 % der ursprünglichen Isocyanatgruppen in Oxazolidinonringe umgewandelt sind und 0 bis 50 % in Isocyanuratringe.

Als Polyepoxidverbindung dient beim bekannten Verfahren insbesondere Bisphenol A und Tetrabrombisphenol A, die Polyisocyanatverbindung ist 4,4'-Methylen-bis(phenylisocyanat) (MDI) oder ein Isomeres davon, polymeres MDI oder Toluylendiisocyanat. Als Katalysator (für die Reaktion zwischen der Polyepoxid- und der Polyisocyanatverbindung) eignet sich vor allem eine Imidazolverbindung oder Tetraphenylphosphoniumbromid; die Katalysatorkonzentration beträgt vorzugsweise 0,02 bis 1 Gew.-%, insbesondere 0,02 bis 0,1 Gew.-%, bezogen auf das Gesamtgewicht von Polyepoxid- und Polyisocyanatverbindung.

Zur Herstellung der Polyoxazolidinone wird in der Weise vorgegangen, daß der Katalysator, gegebenenfalls gelöst in einem geeigneten Lösungsmittel, der Polyepoxidverbindung zugesetzt wird, im allgemeinen bei einer Temperatur unterhalb der Reaktionstemperatur von 110 bis 200°C. Die Temperatur wird dann auf die Reaktionstemperatur angehoben und dort gehalten, während die Polyisocyanatverbindung kontrolliert zugegeben, d.h. zugetropft wird.

In ähnlicher Weise wird bei einem aus der EP 0 296 450 Al bekannten Verfahren zur Herstellung von Oxazolidinongruppen enthaltenden (dort vereinfacht als Oxazolidongruppen bezeichnet) oligomeren Polyepoxiden aus Bisepoxiden und Diisocyanaten vorgegangen. Bei diesem Verfahren werden bei 140 bis 180°C in Gegenwart eines Phosphoniumsalzes als Katalysator - entweder Bisepoxidether mit OH-Gruppen entsprechend einer OH-Zahl von mindestens 2 mit aromatischen Diisocyanaten, welche zwei unterschiedlich reaktive NCO-Gruppen in einer Menge von mindestens 1/4 des Gewichts des Diisocyanats aufweisen, oder Bisepoxidester mit OH-Gruppen entsprechend einer OH-Zahl von mindestens 2 mit aromatischen, aliphatischen oder cycloaliphatischen Diisocyanaten in einem Mengenverhältnis von NCO-Gruppen zu Epoxidgruppen von 1:1,4 bis 1:2,5 umgesetzt. Der Katalysator wird dabei in einer Menge von 0,005 bis 1,0 Gew.-% eingesetzt, bevorzugt 0,01 bis 0,5 Gew.-%, bezogen auf Bisepoxid.

Wesentlich ist bei diesem Verfahren, daß die Oxazolidinon-Epoxidharze nur dann erhalten werden, wenn OH-gruppenhaltige Epoxidharze zusammen mit ungleich reaktive NCO-Gruppen enthaltenden Diisocyanaten - unter Phosphoniumsalzkatalyse - bei ca. 160°C zur Reaktion gebracht werden. Zur Herstellung der Polyepoxide wird dabei in der Weise vorgegangen, daß das Bisepoxidharz zusammen mit dem Katalysator unter Stickstoff auf 160°C aufgeheizt wird. Zu der Schmelze wird dann das Diisocyanat zugetropft, und zwar so schnell, daß eine Temperatur von ca. 170°C eingehalten wird. Nach der Zugabe des gesamten Diisocyanats wird bei 160°C nachgerührt, bis der berechnete Epoxidwert erreicht und kein reaktives NCO mehr nachweisbar ist.

Beide bekannte Verfahren sind nur für Ansatzgrößen im Labormaßstab beschrieben. Wesentlich dabei ist, daß das Polyisocyanat nur tropfenweise zum katalysatorhaltigen Polyepoxid zugegeben wird. Es ist deshalb kaum möglich, die angegebenen Verfahren - im technischen Maßstab - in wirtschaftlicher Weise durchzuführen. Ferner gelangen bei diesen Verfahren nur füllstofffreie Reaktionsharzmischungen zum Einsatz.

Aufgabe der Erfindung ist es, ein wirtschaftliches Verfahren zur Herstellung einer Oxazolidinonstrukturen aufweisenden prepolymeren Epoxidharzmischung, die lagerstabil, löslich bzw. schmelzbar, latent reaktiv und härtbar ist, anzugeben, das für eine technische Produktion eingesetzt werden kann.

Dies wird erfindungsgemäß dadurch erreicht, daß einem kontinuierlich arbeitenden Reaktor eine Füllstoff enthaltende, thermisch polymerisierbare Reaktionsharzmischung von Polyepoxidharz, bestehend aus einer Mischung von di- und mehrfunktionellen Epoxidharzen, und Polyisocyanatharz mit einem Molverhältnis der Epoxidgruppen zu den Isocyanatgruppen > 1 zugeführt wird, daß die Reaktionsharzmischung - unter Verwendung von substituiertem Imidazol als Reaktionsbeschleuniger, mit einem Gehalt von 0,5 bis 2,5 %, bezogen auf Polyepoxidharz - bei Reaktionstemperaturen bis 200°C umgesetzt wird, wobei die Temperatur des Reaktors 140 bis 190°C beträgt, und daß das Extrudat mit Hilfe einer an der Austrittsdüse des Reaktors angebrachten Kühlvorrichtung auf eine Temperatur < 50°C abgekühlt wird.

Beim erfindungsgemäßen Verfahren kann die Aufbereitung der Reaktionsharzmischung und deren Zuführung zum Reaktor auf verschiedene Weise erfolgen. Bei einer ersten Variante werden - zur Herstellung einer Harzkomponente - Polyepoxidharz, d.h. di- und mehrfunktionelle Epoxidharze, und Polyisocyanatharz in einem thermostatisierbaren und evakuierbaren Mischbehälter, der beispielsweise mit einem Wendelrührer ausgerüstet ist und eine kontinuierliche Temperaturmessung in der Harzmischung erlaubt, bei Temperaturen bis 100°C unter Rühren gemischt. In diese Harzmischung werden Füllstoff und gegebenenfalls Additive eingemischt, und dann wird unter Rühren bei einer Temperatur bis 100°C unter vermindertem Druck mindestens 1 h entgast. In einem zweiten Mischbehälter wird - zur Herstellung einer Beschleunigerkomponente - der Reaktionsbeschleuniger in einer der in der Rezeptur vorgesehenen Harzkomponenten oder in einer Teilmenge davon unter Entgasen gelöst bzw. dispergiert. Die beiden Komponenten werden dann mittels Dosierpumpen, beispielsweise mittels einer beheizbaren Schlauchpumpe bzw. einer Zahnradpumpe, einem statischen Mischrohr zugeführt, und die aus dem Mischrohr austretende Reaktionsharzmischung wird in den Reaktor eindosiert.

Für die Reaktionsextrusion der in der beschriebenen Weise über das statische Mischrohr zugeführten Harzmischung eignet sich insbesondere ein Doppelschneckenextruder. Von Vorteil ist dabei, wenn beim Extruder das Verhältnis der Schneckenlänge zum äußeren Schneckendurchmesser 20 bis 50 und insbesondere 25 bis 40 beträgt. Darüber hinaus wird der Extruder vorzugsweise so ausgelegt, daß die Masseverweilzeit bei Schneckendrehzahlen > 10 min⁻¹ kleiner als 5 min ist, vorzugsweise kleiner als 3 min, und eine minimale axiale Rückströmung entsteht.

Der Extruder, dem Harzmengen von 20 bis 200 g/min kontinuierlich zugeführt werden, enthält förderaktive Schneckenelemente (Schneckendurchmesser beispielsweise 31,8 mm, Schneckenlänge 880 mm) und ist mit fünf thermostatisierbaren Zylinderzonen ausgestattet, die beispielsweise auf 160 bis 180°C aufgeheizt werden. Damit ergibt sich für die Umsetzung der Reaktionsharzmischung in die prepolymere Epoxidharzmischung eine Verweilzeit im Reaktor von weniger als 3 min. Das durch eine Breitschlitzdüse austretende Extrudat wird auf eine gekühlte Abgleitschiene geführt und rasch auf Temperaturen unter 50°C abgekühlt, wobei die Epoxidharzmischung zu bandförmigen Endlosstreifen erstarrt. Diese Streifen werden auf einem Abzugsband unter eine Gegenrolle gezogen und dadurch grob zerkleinert. Das vorzerkleinerte Produkt wird in einer Feinprallmühle auf die gewünschte Korngröße gemahlen. Die auf diese Weise hergestellte rieselfähige, lagerstabile, lösliche bzw. schmelzbare, latent reaktive prepolymere Epoxidharzmischung, die Oxazolidinonstrukturen aufweist, wird unter Ausschluß von Feuchtigkeit gelagert.

Bei einer zweiten Variante erfolgt die Aufbereitung der Harzkomponente wie im ersten Fall. Zur Herstellung der Beschleunigerkomponente wird der Reaktionsbeschleuniger mit einer Teilmenge des in der Rezeptur vorgesehenen Füllstoffes und gegebenenfalls mit Additiven intensiv gemischt. Die beiden Komponenten werden dann beispielsweise mittels einer Schlauchpumpe bzw. eines Doppelschneckenpulverdosiergerätes in einen Doppelschneckenextruder eindosiert. Im Unterschied zur ersten Variante sind hierbei die Schnecken in der Mischzone des Extruders, die sich dem Einzugsbereich anschließt, mit förderaktiven Knetelementen versehen; die Temperatur in der Mischzone beträgt bis zu 100°C. Der weitere Aufbau des Extruders und die Verfahrensbedingungen entsprechen weitgehend Variante 1.

Bei einer dritten Variante werden zur Herstellung einer Harzkomponente Polyepoxidharz und Polyisocyanatharz, die im flüssigen, zum Teil hochviskosen Zustand vorliegen, aus temperierbaren Vorlagebehältern mittels Kolben-, Membran- oder Zahnraddosierpumpen in kontinuierlichen Massenströmen getrennt in einen Doppelschneckenmischextruder oder in einen um eine Vormischstrecke verlängerten Doppelschneckenextruder eindosiert. An getrennter Stelle wird stromabwärts ein rieselfähiges Vorgemisch aus Reaktionsbeschleuniger, Füllstoff und gegebenenfalls Additiven mittels eines Doppelschneckendosiergerätes zudosiert. Nach einer angemessenen Teil-Mischstrecke ist zur Entgasung eine Vakuumeinrichtung angebracht, mit der flüchtige Bestandteile entfernt werden können. Die Temperaturen in der gesamten Mischstrecke betragen bis zu 100°C. Die Schnecken des Mischextruders bzw. der Vormischbereich des Reaktionsextruders sind vorwiegend aus Mischelementen aufgebaut. Bei Verwendung eines separaten Mischextruders wird die Harzkomponente vom Mischextruder und die Beschleunigerkomponente, wie im zweiten Fall, mit einer Doppelschneckendosiereinrichtung in den Reaktionsextruder eindosiert. Bei Verwendung eines erweiterten Extruders wird die Beschleunigerkomponente am Ende der Mischstrecke mittels eines Doppelschneckendosiergerätes eindosiert. Ab dieser Stelle gelten dann vergleichbare Bedingungen wie nach der Einzugszone bei der zweiten Variante.

Beim erfindungsgemäßen Verfahren gelangt eine Reaktionsharzmischung von Polyepoxid- und Polyisocyanatharz zum Einsatz, wobei das Polyepoxidharz eine Mischung von di- und mehrfunktionellen Epoxidharzen ist. Dabei beträgt das Molverhältnis von mehrfunktionellem zu difunktionellem Epoxidharz, bezogen auf die Epoxidgruppen, 0,1 bis 1,7 und vorzugsweise 0,2 bis 0,75. Das Molverhältnis der Epoxidzu den Isocyanatgruppen (in der Reaktionsharzmischung) ist > 1 und beträgt vorzugsweise 1,5 bis 4,0.

Als Epoxidharze, die Bestandteil der Polyepoxidharzmischung sind, eignen sich beim erfindungsgemäßen Verfahren insbesondere Bisphenol A- und Bisphenol F-Epoxidharze sowie Phenolnovolak- und Kresolnovolak-Epoxidharze bzw. Siliconepoxidharze, Triglycidylisocyanurat, Tetraglycidyldiaminodiphenylmethan und Polyglycidylphosphorharze. Als Siliconepoxidharze dienen insbesondere Verbindungen folgender Struktur: 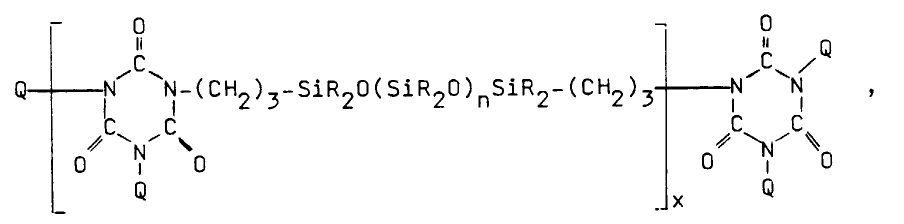 wobei folgendes gilt:
n ist eine ganze Zahl von 0 bis 25,
x ist eine ganze Zahl von 0 bis 3,
R = Alkyl oder Aryl,
Q = -(CH₂)₃SiR₂O(SiR₂O)ₙSiR₂R',
wobei n und R die vorstehend angegebene Bedeutung haben und R' ein epoxyfunktioneller Rest mit 6 C-Atomen ist.

Der Gehalt an Siliconepoxidharz beträgt bis zu 20 %, vorzugsweise 1 bis 7 %, jeweils bezogen auf die füllstofffreie Reaktionsharzmischung aus Polyepoxid- und Polyisocyanatharz.

Als Polyisocyanatharz werden vorzugsweise Isomerengemische von Diisocyanatodiphenylmethan eingesetzt. Geeignet sind beispielsweise aber auch Isomerengemische von Toluylendiisocyanat und Prepolymere von Isomerengemischen des Diisocyanatodiphenylmethans. Ferner können Mischungen der genannten Polyisocyanatharze verwendet werden.

Als Reaktionsbeschleuniger finden beim erfindungsgemäßen Verfahren substituierte Imidazole Verwendung. Dabei gelangen vorzugsweise 2-Ethyl-4-methylimidazol, 2-Phenylimidazol und l-Cyanoethyl-2-phenylimidazol zum Einsatz. Weitere geeignete Reaktionsbeschleuniger sind beispielsweise 1,2-Dimethylimidazol, l-Cyanoethyl-2-methylimidazol, 2-Isopropylimidazol und l-Benzyl-2-phenylimidazol. Der Gehalt an Reaktionsbeschleuniger beträgt, bezogen auf Polyepoxidharz, d.h. auf die Mischung der di- und mehrfunktionellen Epoxidharze, 0,5 bis 2,5 %, vorzugsweise 1,0 bis 1,8 %.

Als Füllstoff eignen sich insbesondere mineralische Füllstoffe, wie Quarzgut in splittriger und/oder sphärischer Kornform (unterschiedlicher Korngrößenverteilung). Des weiteren können keramische Füllstoffe, wie Aluminiumoxid, sowie Mischungen von keramischen Füllstoffen und mineralischen Füllstoffen verwendet werden. Geeignet sind auch faserförmige Füllstoffe, wie Kurzglasfasern.

Während beim Stand der Technik, wie insbesondere aus den Ausführungsbeispielen hervorgeht, geringe Katalysatorkonzentrationen verwendet werden, nämlich 0,01 bis 0,35 % (WO 90/15089) bzw. 0,1 % (EP 0 296 450 A1), jeweils bezogen auf Polyepoxid, werden zur Herstellung von reaktiven, härtbaren prepolymeren Epoxidharzmischungen wesentlich höhere Katalysatormengen benötigt. Beim erfindungsgemäßen Verfahren beträgt die Katalysatorkonzentration deshalb 0,5 bis 2,5 %, bevorzugt 1,0 bis 1,8 %, bezogen auf die Mischung der di- und mehrfunktionellen Epoxidharze. Diese hohen Katalysatorkonzentrationen sind erforderlich, damit die latent reaktive prepolymere Epoxidharzmischung ohne eine - bei füllstoffhaltigen Systemen aufwendige - Nachbeschleunigung in einer technisch relevanten Zeit gehärtet werden kann.

Ein Verfahren, das eine wirtschaftliche Umsetzung von Reaktionsharzmischungen aus Polyepoxid- und Polyisocyanatharz mit einem derart hohen Beschleunigergehalt zu Oxazolidinonstrukturen aufweisenden lagerstabilen, löslichen bzw. schmelzbaren, latent reaktiven, härtbaren prepolymeren Epoxidharzmischungen im technischen Maßstab ermöglicht, ist bislang nicht bekannt. Die Gründe hierfür sind, daß zum einen die hohe Wärmetönung der ablaufenden Reaktionen und zum anderen Phasenübergänge, vom viskosen in den festen und vom festen zurück in den viskosen Zustand, beherrscht werden müssen. Es zeigte sich nun, daß sowohl die hohe Wärmetönung als auch die Phasenübergänge beherrschbar sind, wenn - entsprechend dem erfindungsgemäßen Verfahren - die Herstellung der prepolymeren Epoxidharzmischung mit Hilfe eines kontinuierlich arbeitenden Reaktors durchgeführt wird.

Aus der EP 0 193 809 A2 ist die Herstellung von Epoxidharzmassen aus Epoxidharzen und Phenolen durch Reaktionsextrusion bekannt. Als Reaktionsprodukte werden dabei, je nach dem eingesetzten Molverhältnis von Epoxid- zu phenolischen Hydroxylgruppen, kettenverlängerte Epoxidharze bzw. Harze mit phenolischen Endgruppen erhalten. Es finden sich auch Hinweise auf die Herstellung von Harzmaterialien durch Extrusion von Epoxidharzen mit Thiol-, Carboxyl-, Isocyanat-, Thioisocyanat oder sekundäre Aminogruppen enthaltenden Verbindungen, nähere Angaben werden hierzu aber nicht gemacht, insbesondere wird dies nicht durch Beispiele belegt. Die angegebenen Versuchsbedingungen sind auch nicht auf Epoxid/Isocyanat-Systeme übertragbar.

Für die Herstellung der Epoxidharzmischung nach der Erfindung ist von besonderer Bedeutung, daß die Schnecken des Reaktionsextruders in den Extruderabschnitten, die nicht zum Mischen der Komponenten, sondern zur Durchführung der Reaktion dienen, ausschließlich mit Förderelementen ausgestattet sind. Dadurch wird einerseits gewährleistet, daß die Drehmomentbeanspruchung des Extruders möglichst gering gehalten wird und die Schub- und Normalkräfte der drehenden Schnecken einen kompakten Feststoffbereich verhindern können, und andererseits wird durch eine möglichst enge Verweilzeitverteilung des Extrudats eine exakte und gleichmäßige Temperaturführung mit einem einheitlichen Temperaturprofil für das gesamte Extrudat garantiert. Ferner ist hierbei von entscheidender Bedeutung, daß die durch die mechanische Einwirkung der Schnecken auf die Reaktionsharzmischung bedingte Dissipationsenergie durch die ausschließliche Verwendung von Förderelementen klein gehalten wird und die hohe Reaktionsenthalpie, die beim Aufschmelzen zur prepolymen Epoxidharzmischung auftritt, durch intensive Kühlung des Extrudats nach dem Austritt aus der Düse des Reaktionsextruders abgeführt wird. Dazu ist die Extruderdüse so ausgebildet, daß das Extrudat mit - relativ zum Extrusionsvolumen - maximaler Oberfläche ausgetragen und unmittelbar mittels der an der Extruderdüse angebrachten Kühlvorrichtung abgekühlt wird.

Für den Fachmann war nicht vorhersehbar, daß bei der Herstellung der prepolymeren Epoxidharzmischung nach der Erfindung die Verwendung von mehrfunktionellen Epoxidharzen, wie Tetraglycidyldiaminodiphenylmethan und die angeführten Siliconepoxidharze, sowie die Anwendung hoher Beschleunigerkonzentrationen - selbst bei Reaktionstemperaturen bis zu 200°C - nicht zu einem durch Härtung, d.h. chemische Vernetzung, unlöslichen und nicht mehr schmelzbaren Reaktionsprodukt führt. Überraschenderweise wird vielmehr eine Oxazolidinonstrukturen aufweisende lagerstabile, lösliche bzw. schmelzbare, latent reaktive, härtbare prepolymere Epoxidharzmischung erhalten, die - ohne Nachbeschleunigung - sehr gut gehärtet werden kann.

Das erfindungsgemäße Verfahren unterscheidet sich gravierend in der Zusammensetzung der Reaktionsharzmischung aus Polyepoxidharz und Polyisocyanatharz von den beim Stand der Technik eingesetzten Reaktionsmischungen. Einerseits handelt es sich bei den Reaktionsharzmischungen nach der Erfindung nämlich um hochgefüllte Mischungen (Füllstoffanteil bis zu 80 % und mehr), für die - aufgrund ihrer hohen Viskosität - zur Aufbereitung und Handhabung andere Bedingungen erforderlich sind als bei ungefüllten, niedrigviskosen Reaktionsharzmischungen. Andererseits werden zur Herstellung der hochgefüllten Reaktionsharzmischungen Mischungen von Epoxidharzen unterschiedlichen chemischen Aufbaus und unterschiedlicher Funktionalität verwendet. Solche Mischungen sind aus dem Stand der Technik aber nicht bekannt. Darüber hinaus sind dort weder der besonders geeignete Reaktionsbeschleuniger 1-Cyanoethyl-2-phenylimidazol noch die - für die Verarbeitungseigenschaften wichtigen - Siliconepoxidharze der genannten Art und das - zur Anhebung der Glasübergangstemperatur besonders geeignete - Tetraglycidyldiaminodiphenylmethan angegeben.

Das erfindungsgemäße Verfahren eignet sich in hervorragender Weise zur technischen Herstellung lagerstabiler, latent reaktiver, härtbarer prepolymerer Epoxidharzmischungen, die Oxazolidinonstrukturen aufweisen. Aufgrund der angegebenen Bedingungen ist der Fachmann in der Lage, das Verfahren im jeweils geforderten technischen Maßstab durchzuführen.

Anhand von Ausführungsbeispielen soll die Erfindung noch näher erläutert werden.

### Beispiel 1

In einem thermostatisierbaren und evakuierbaren Mischbehälter (Nutzvolumen: 20 1) werden zur Herstellung einer Harzkomponente 2,52 kg Bisphenol A-Epoxidharz (Epoxidwert: 5,78 mol/kg), 0,155 kg eines Siliconepoxids (Epoxidwert: 1,9 mol/kg), hergestellt nach Beispiel 9 der EP-05 0 399 199, und 0,885 kg eines Isomerengemisches von Diisocyanatodiphenylmethan (Isocyanatwert: 7,9 mol/kg) unter Rühren bei einer Temperatur bis zu 90°C gemischt. Nachfolgend werden zur Mischung unter Rühren portionsweise 7,245 kg sphärisches Quarzgut, 3,105 kg splittriges Quarzgut und 0,15 kg Ruß gegeben, und dann wird 1 h bei 90°C unter Rühren entgast. Zur Herstellung einer Beschleunigerkomponente werden in einem thermostatisierbaren und evakuierbaren Mischbehälter (Nutzvolumen: 2 1) 1,62 kg Tetraglycidyldiaminodiphenylmethan (Epoxidwert: 8,2 mol/kg) mit 81,2 g 2-Phenylimidazol bei 60°C gemischt und entgast. Die Harzkomponente wird mittels einer Schlauchpumpe bei einem kontinuierlichen Massefluß von 0,1 kg/min einem statischen Mischrohr zugeführt. Gleichzeitig wird mit einer Zahnradpumpe die Beschleunigerkomponente in das statische Mischrohr eindosiert (Massefluß: 6,5 g/min). Das statische Mischrohr speist einen Doppelschneckenextruder, dessen Schnecken aus Förderelementen aufgebaut sind; die Schneckenlänge beträgt 880 mm, der äußere Schneckendurchmesser 31,8 mm. Die fünf Zylinderzonen des Extruders sind auf 160°C geheizt. Die Schneckendrehzahl beträgt 20 min⁻¹, die Masseverweilzeit im Doppelschneckenextruder 2,5 min.

Das durch eine Doppelschlitzdüse (Querschnitt: je 1,5 mm x 20 mm) austretende Extrudat wird auf eine gekühlte Abgleitschiene geführt, auf 45°C abgekühlt und auf einem angeschlossenen elastischen Abzugsband durch eine Gegenrolle zerkleinert. Das vorzerkleinerte Extrudat wird mittels einer Feinprallmühle auf die gewünschte Korngröße gemahlen. Die dabei erhaltene rieselfähige, latent reaktive, härtbare, Oxazolidinonstrukturen aufweisende prepolymere Epoxidharzmischung (Epoxidwert: 0,89 mol/kg; Aufschmelzbereich: 75 bis 95°C) wird bei Raumtemperatur unter Ausschluß von Feuchtigkeit gelagert.

### Beispiel 2

In einen thermostatisierbaren und evakuierbaren Mischbehälter (Nutzinhalt: 20 1) werden zur Herstellung einer Harzkomponente 2,55 kg Bisphenol A-Epoxidharz (Epoxidwert: 5,78 mol/kg), 0,155 kg eines Siliconepoxids (Epoxidwert: 1,9 mol/kg), hergestellt nach Beispiel 9 der EP-OS 0 399 199, 0,81 kg Tetraglycidyldiaminodiphenylmethan (Epoxidwert: 8,2 mol/kg) und 0,885 kg eines Isomerengemisches von Diisocyanatodiphenylmethan (Isocyanatwert: 7,9 mol/kg) gegeben; die Mischung wird dann unter Rühren auf 60°C erwärmt. Nachfolgend werden zur Mischung unter Rühren portionsweise 6,195 kg sphärisches Quarzgut, 2,655 kg splittriges Quarzgut und 0,135 kg Ruß gegeben. Anschließend wird 1 h bei 60°C unter vermindertem Druck (< 1 mbar) entgast. Zur Herstellung einer Beschleunigerkomponente werden 1,05 kg sphärisches Quarzgut, 0,45 kg splittriges Quarzgut, 0,015 kg Ruß und 55,5 g 1-Cyanoethyl-2-phenylimidazol homogen gemischt. Die Harzkomponente und die Beschleunigerkomponente werden gleichzeitig in einen Doppelschneckenextruder eindosiert, die Harzkomponente mittels einer Schlauchpumpe bei einem kontinuierlichen Massefluß von 0,042 kg/min und die Beschleunigerkomponente mittels einer Doppelschneckendosiereinrichtung (Massefluß: 5 g/min). Die Schnecken des Extruders sind aus Förderelementen aufgebaut, und unmittelbar nach der Einzugszone sind zum homogenen Mischen der Harz- und der Beschleunigerkomponente drei fördernde Knetblöcke von je 28 mm Länge montiert. Die Schneckenlänge beträgt 880 mm, der äußere Schneckendurchmesser 31,8 mm; die fünf Zylinderzonen des Extruders sind auf folgende Temperatur eingestellt: Zone 1 (Mischzone): 81°C, Zone 2: 130°C, Zone 3: 177°C, Zone 4: 178°C, Zone 5: 180°C. Die Schneckendrehzahl beträgt 20 min⁻¹, wodurch sich eine Masseverweilzeit im Doppelschneckenextruder von 2,5 min ergibt.

Das durch eine Doppelschlitzdüse (Querschnitt: je 2 mm x 20 mm) austretende Extrudat wird auf eine gekühlte Abgleitschiene geführt, auf 43°C abgekühlt und auf einem angeschlossenen elastischen Abzugsband durch eine Gegenrolle zerkleinert. Das vorzerkleinerte Extrudat wird mittels einer Feinprallmühle auf die gewünschte Korngröße gemahlen. Die dabei erhaltene rieselfähige, latent reaktive, härtbare, Oxazolidinonstrukturen aufweisende prepolymere Epoxidharzmischung (Epoxidwert: 0,84 mol/kg; Aufschmelzbereich: 75 bis 95°C) wird bei Raumtemperatur unter Ausschluß von Feuchtigkeit gelagert.

### Beispiel 3

In einen thermostatisierbaren und evakuierbaren Mischbehälter (Nutzinhalt: 50 1) werden zur Herstellung einer Harzkomponente 10,08 kg Bisphenol A-Epoxidharz (Epoxidwert: 5,78 mol/kg), 0,62 kg eines Siliconepoxids (Epoxidwert: 1,9 mol/kg), hergestellt nach Beispiel 9 der EP-OS 0 399 199, 3,24 kg Tetraglycidyldiaminodiphenylmethan (Epoxidwert: 8,2 mol/kg) und 3,42 kg eines Isomerengemisches von Diisocyanatodiphenylmethan (Isocyanatwert: 7,9 mol/kg) gegeben; die Mischung wird dann unter Rühren auf 80°C erwärmt. Nachfolgend werden zur Mischung unter Rühren portionsweise 26,084 kg sphärisches Quarzgut, 11,18 kg splittriges Quarzgut, 0,3 kg Polyethylenwachs und 0,54 kg Ruß gegeben. Anschließend wird 1 h bei 80°C unter vermindertem Druck (< 1 mbar) entgast. Zur Herstellung einer Beschleunigerkomponente werden 2,9 kg sphärisches Quarzgut, 1,244 kg splittriges Quarzgut, 0,06 kg Ruß und 222 g 1-Cyanoethyl-2-phenylimidazol homogen gemischt. Bei einem kontinuierlichen Massefluß werden pro Minute 0,25 kg der Harzkomponente mittels einer Membrandosierpumpe und 21 g der Beschleunigerkomponente mittels einer Doppelschneckendosiereinrichtung gleichzeitig in einen Doppelschneckenextruder eindosiert. Die Schnecken des Extruders sind aus Förderelementen aufgebaut, und unmittelbar nach der Einzugszone sind zum homogenen Mischen der Harz- und der Beschleunigerkomponente drei fördernde Knetblöcke von je 40 mm Länge montiert. Die Schneckenlänge beträgt 1485 mm, der äußere Schneckendurchmesser 42 mm; die sechs Zylinderzonen des Extruders sind auf folgende Temperatur eingestellt: Zone 1 (Mischzone): 75°C, Zone 2: 120°C, Zone 3: 170°C, Zone 4: 175°C, Zone 5: 175°C, Zone 6: 170°C. Die Schneckendrehzahl beträgt 25 min⁻¹, wodurch sich eine Masseverweilzeit im Doppelschneckenextruder von 2,4 min ergibt.

Das durch eine Doppelschlitzdüse (Querschnitt: je 3 mm x 25 mm) austretende Extrudat wird auf eine gekühlte Abgleitschiene geführt, auf 45°C abgekühlt und auf einem angeschlossenen elastischen Abzugsband durch eine Gegenrolle zerkleinert. Das vorzerkleinerte Extrudat wird mittels einer Feinprallmühle auf die gewünschte Korngröße gemahlen. Die dabei erhaltene rieselfähige, latent reaktive, härtbare, Oxazolidinonstrukturen aufweisende prepolymere Epoxidharzmischung (Epoxidwert: 0,87 mol/kg; Aufschmelzbereich: 75 bis 95°C) wird bei Raumtemperatur unter Ausschluß von Feuchtigkeit gelagert.

### Beispiel 4

In einen thermostatisierbaren und evakuierbaren Mischbehälter (Nutzinhalt: 100 1) werden zur Herstellung einer Harzkomponente 25,2 kg Bisphenol A-Epoxidharz (Epoxidwert: 5,78 mol/kg), 1,55 kg eines Siliconepoxids (Epoxidwert: 1,9 mol/kg), hergestellt nach Beispiel 9 der EP-OS 0 399 199, 8,1 kg Tetraglycidyldiaminodiphenylmethan (Epoxidwert: 8,2 mol/kg) und 8,85 kg eines Isomerengemisches von Diisocyanatodiphenylmethan (Isocyanatwert: 7,9 mol/kg) gegeben; die Mischung wird dann unter Rühren auf 80°C erwärmt. Nachfolgend werden zur Mischung unter Rühren portionsweise 61,95 kg sphärisches Quarzgut, 26,55 kg splittriges Quarzgut und 1,35 kg Ruß gegeben. Anschließend wird 1 h bei 80°C unter vermindertem Druck (< 1 mbar) entgast. Zur Herstellung einer Beschleunigerkomponente werden 10,5 kg sphärisches Quarzgut, 4,0 kg splittriges Quarzgut, 0,15 kg Ruß und 417 g 2-Phenylimidazol homogen gemischt. Die Harzkomponente und die Beschleunigerkomponente werden gleichzeitig in einen Doppelschneckenextruder eindosiert, die Harzkomponente mittels einer Membrandosierpumpe bei einem kontinuierlichen Massefluß von 2 kg/min und die Beschleunigerkomponente mittels einer Doppelschneckendosiereinrichtung (Massefluß: 238 g/ min). Die Schnecken des Extruders sind aus Förderelementen aufgebaut, und unmittelbar nach der Einzugszone sind zum homogenen Mischen der Harz- und der Beschleunigerkomponente neun fördernde Knetblöcke von je 80 mm Länge montiert. Die Schneckenlänge beträgt 3480 mm, der äußere Schneckendurchmesser 91,8 mm; die zehn Zylinderzonen des Extruders sind auf folgende Temperatur eingestellt: Zonen 1 und 2 (Mischzonen): 81°C, Zone 3: 130°C, Zonen 4 bis 8: 175°C, Zone 9: 173°C, Zone 10: 170°C. Die Schneckendrehzahl beträgt 20 min⁻¹, wodurch sich eine Masseverweilzeit im Doppelschneckenextruder von 2,8 min ergibt.

Die weitere Verarbeitung erfolgt gemäß Beispiel 3. Die dabei erhaltene rieselfähige, latent reaktive, härtbare, Oxazolidinonstrukturen aufweisende prepolymere Epoxidharzmischung (Epoxidwert: 0,85 mol/kg; Aufschmelzbereich: 75 bis 95°C) wird bei Raumtemperatur unter Ausschluß von Feuchtigkeit gelagert.

## Patentansprüche

1. Verfahren zur Herstellung einer Oxazolidinonstrukturen aufweisenden prepolymeren Epoxidharzmischung, **dadurch gekennzeichnet**, daß einem kontinuierlich arbeitenden Reaktor eine Füllstoff enthaltende, thermisch polymerisierbare Reaktionsharzmischung von Polyepoxidharz, bestehend aus einer Mischung von di- und mehrfunktionellen Epoxidharzen, und Polyisocyanatharz mit einem Molverhältnis der Epoxidgruppen zu den Isocyanatgruppen > 1 zugeführt wird, daß die Reaktionsharzmischung - unter Verwendung von substituiertem Imidazol als Reaktionsbeschleuniger, mit einem Gehalt von 0,5 bis 2,5 %, bezogen auf Polyepoxidharz - bei Reaktionstemperaturen bis 200°C umgesetzt wird, wobei die Temperatur des Reaktors 140 bis 190°C beträgt, und daß das Extrudat mit Hilfe einer an der Austrittsdüse des Reaktors angebrachten Kühlvorrichtung auf eine Temperatur < 50°C abgekühlt wird.

2. Verfahren nach Anspruch 1, **dadurch gekennzeichnet**, daß bei Temperaturen bis 100°C eine den Füllstoff enthaltende Harzkomponente aus Polyepoxidharz und Polyisocyanatharz aufbereitet wird.

3. Verfahren nach Anspruch 1, **dadurch gekennzeichnet**, daß aus dem Reaktionsbeschleuniger und einer der Reaktionsharzkomponenten oder einer Teilmenge davon eine Beschleunigerkomponente aufbereitet wird.

4. Verfahren nach den Ansprüchen 2 und 3, **dadurch gekennzeichnet**, daß die Harzkomponente und die Beschleunigerkomponente einem statischen Mischrohr zugeführt werden, und daß die aus dem Mischrohr austretende Reaktionsharzmischung in den Reaktor eindosiert wird.

5. Verfahren nach Anspruch 1, **dadurch gekennzeichnet**, daß aus dem Reaktionsbeschleuniger und einer Teilmenge des Füllstoffes eine Beschleunigerkomponente aufbereitet wird.

6. Verfahren nach den Ansprüchen 2 und 5, **dadurch gekennzeichnet**, daß die Harzkomponente und die Beschleunigerkomponente getrennt in den Reaktor eindosiert werden.

7. Verfahren nach einem der Ansprüche 1 bis 6, **dadurch gekennzeichnet**, daß der Gehalt der Reaktionsharzmischung an Reaktionsbeschleuniger 1,0 bis 1,8 % beträgt, bezogen auf Polyepoxidharz.

8. Verfahren nach einem der Ansprüche 1 bis 7, **dadurch gekennzeichnet**, daß als Epoxidharz ein Bisphenol A- oder Bisphenol F-Epoxidharz, ein Phenolnovolak- oder Kresolnovolak-Epoxidharz, ein Siliconepoxidharz, Triglycidylisocyanurat, Tetraglycidyldiaminodiphenylmethan oder ein Polyglycidylphosphorharz verwendet wird.

9. Verfahren nach einem der Ansprüche 1 bis 8, **dadurch gekennzeichnet**, daß als Polyisocyanatharz ein Isomerengemisch von Diisocyanatodiphenylmethan oder von Toluylendiisocyanat oder ein Prepolymer eines Isomerengemisches von Diisocyanatodiphenylmethan verwendet wird.

10. Verfahren nach einem der Ansprüche 1 bis 9, **dadurch gekennzeichnet**, daß als Reaktionsbeschleuniger 2-Ethyl-4-methylimidazol, 2-Phenylimidazol oder l-Cyanoethyl-2-phenylimidazol verwendet wird.

11. Verfahren nach einem oder mehreren der Ansprüche 1 bis 10, **dadurch gekennzeichnet**, daß als kontinuierlich arbeitender Reaktor ein Doppelschneckenextruder verwendet wird, bei dem das Verhältnis der Schneckenlänge zum äußeren Schneckendurchmesser 20 bis 50, vorzugsweise 25 bis 40, beträgt.

12. Verfahren nach Anspruch 11, **dadurch gekennzeichnet**, daß ein Reaktor verwendet wird, bei dem die Wellen aus förderaktiven Schneckenelementen bzw. aus förderaktiven Schnecken- und Knetelementen bestehen und die Masseverweilzeit - bei Drehzahlen > 10 min⁻¹ und minimaler axialer Rückströmung - < 5 min ist, vorzugsweise < 3 min.

## Claims

1. Process for producing an oxazolidinone-structures containing prepolymeric epoxy resin mixture, characterised in that there is fed to a continuously operating reactor a filler-containing, thermally-polymerizable reaction resin mixture of polyepoxy resin, consisting of a mixture of di- and polyfunctional epoxy resins,and polyisocyanate resin, with a molar ratio of epoxide groups to isocyanate groups of > 1, that the reaction resin mixture - using substituted imidazole as reaction catalyst, with a content of 0.5 to 2.5%, based on polyepoxy resin - is reacted at reaction temperatures of up to 200 °C, wherein the temperature of the reactor is from 140 to 190 °C, and that the extrudate is cooled to a temperature of < 50 °C by means of a cooling device located at the outlet die of the reactor.

2. Process according to claim 1, characterised in that a resin component containing the filler is prepared from polyepoxy resin and polyisocyanate resin at temperatures up to 100 °C.

3. Process according to claim 1, characterised in that a catalyst component is prepared from the reaction catalyst and one of the reaction resin components or a partial amount thereof.

4. Process according to claims 2 and 3, characterised in that the resin component and the catalyst component are fed to a static mixing tube, and that the reaction resin mixture leaving the mixing tube is fed into the reactor.

5. Process according to claim 1, characterised in that a catalyst component is prepared from the reaction catalyst and a partial amount of the filler.

6. Process according to claims 2 and 5, characterised in that the resin component and the catalyst component are fed into the reactor separately.

7. Process according to one of claims 1 to 6, characterised in that the content of the reaction resin mixture in reaction catalyst is from 1.0 to 1.8%, based on polyepoxy resin.

8. Process according to one of claims 1 to 7, characterised in that the epoxy resin used is a bisphenol A or bisphenol F epoxy resin, a phenol novolak or cresol novolak epoxy resin, a silicone epoxy resin, tri-glycidylisocyanurate, tetraglycidyldiaminodiphenylmethane or a polyglycidylphosphorus resin.

9. Process according to one of claims 1 to 8, characterised in that the polyisocyanate resin used is an isomer mixture of diphenylmethane diisocyanate or of toluylene diisocyanate or a prepolymer of a diphenylmethane diisocyanate isomer mixture.

10. Process according to one of claims 1 to 9, characterised in that 2-ethyl-4-methylimidazole, 2-phenylimidazole or 1-cyanoethyl-2-phenylimidazole is used as reaction catalyst.

11. Process according to one or more of claims 1 to 10, characterised in that the continuously operating reactor used is a twin-screw extruder, in which the ratio of the screw length to the outer screw diameter is 20 to 50, preferably 25 to 40.

12. Process according to claim 11, characterised in that a reactor is used in which the shafts consist of conveying screw elements or of conveying screw and kneading elements and the residence time of the material - at screw speeds of > 10 min⁻¹ and with minimum axial backflow - is < 5 min, preferably < 3 min.

## Revendications

1. Procédé pour la préparation d'un mélange prépolymère de résine époxy présentant des structures d'oxazolidinone, caractérisé en ce qu'on achemine à un réacteur travaillant en continu un mélange de résine de réaction polymérisable par voie thermique et contenant une matière de charge, comprenant une résine polyépoxy constituée par un mélange de résines époxy di- et polyfonctionnelles et une résine de polyisocyanate, le rapport molaire des groupes époxy, aux groupes isocyanates étant > 1, en ce qu'on fait réagir le mélange de résine de réaction - en utilisant un imidazole substitué à titre d'accélérateur de la réaction en une teneur de 0,5 à 2,5% rapportés à la résine polyépoxy - à des températures réactionnelles allant jusqu'à 200°C, la température du réacteur s'élevant de 140 à 190°C, et en ce qu'on refroidit l'extrudat à une température < 50°C à l'aide d'un dispositif de refroidissement appliqué sur la buse d'évacuation du réacteur.

2. Procédé selon la revendication 1, caractérisé en ce que, à des températures allant jusqu'à 100°C, on prépare un composant de résine contenant la matière de charge, constitué par une résine polyépoxy et par une résine de polyisocyanate.

3. Procédé selon la revendication 1, caractérisé en ce qu'on prépare un composant d'accélérateur à partir de l'accélérateur de la réaction et d'un des composants de la résine de réaction ou d'une fraction de ce dernier.

4. Procédé selon les revendications 2 et 3, caractérisé en ce qu'on achemine le composant de résine et le composant d'accélérateur à un tube de mélange statique et en ce qu'on introduit dans le réacteur, de manière dosée, le mélange de résine de réaction sortant du tube de mélange.

5. Procédé selon la revendication 1, caractérisé en ce qu'on prépare un composant d'accélérateur à partir de l'accélérateur de la réaction et d'une fraction de la matière de charge.

6. Procédé selon les revendications 2 et 5, caractérisé en ce qu'on introduit le composant de résine et le composant d'accélérateur séparément de manière dosée dans le réacteur.

7. Procédé selon l'une quelconque des revendications 1 à 6, caractérisé en ce que la teneur du mélange de résine de réaction en accélérateur de la réaction s'élève de 1,0 à 1,8% rapporté à la résine polyépoxy.

8. Procédé selon l'une quelconque des revendications 1 à 7, caractérisé en ce qu'on utilise, comme résine époxy, une résine époxy de Bisphénol A ou de Bisphénol F, une résine époxy de phénol-novolaque ou de crésol-novolaque, une résine époxy de silicone, le triglycidylisocyanurate, le tétraglycidyldiaminodiphényl-méthane ou une résine de polyglycidylphosphore.

9. Procédé selon l'une quelconque des revendications 1 à 8, caractérisé en ce qu'on utilise, comme résine de polyisocyanate, un mélange d'isomères du diisocyanatodiphénylméthane ou du toluylènediisocyanate ou un prépolymère d'un mélange d'isomères du diisocyanatodiphénylméthane.

10. Procédé selon l'une quelconque des revendications 1 à 9, caractérisé en ce qu'on utilise, comme accélérateur de la réaction, le 2-éthyl-4-méthylimidazole, le 2-phénylimidazole ou le 1-cyanoéthyl-2-phénylimidazole.

11. Procédé selon une ou plusieurs des revendications 1 à 10, caractérisé en ce qu'on utilise, comme réacteur travaillant en continu, une extrudeuse à double vis sans fin dans laquelle le rapport de la longueur de la vis sans fin au diamètre externe de la vis sans fin s'élève de 20 à 50, de préférence de 25 à 40.

12. Procédé selon la revendication 11, caractérisé en ce qu'on utilise un réacteur dans lequel les arbres sont constitués par des éléments transporteurs sous forme de vis sans fin, respectivement par des éléments transporteurs sous forme de vis sans fin et de malaxeurs, le temps de séjour de la matière - à des vitesses de rotation > 10 min.⁻¹ et à un refluement axial minimal - étant < 5 min., de préférence < 3 min.
